# EUROPEAN PATENT SPECIFICATION

(11) **EP 3 748 404 B1**
(45) Date of publication and mention of the grant of the patent: **25.10.2023**
(21) Application number: 18921124.6
(22) Date of filing: 13.12.2018
(51) Int. Cl.: G02B 5/08, G02B 5/02, F21V 8/00, B32B 3/30, B32B 7/023, B32B 15/00, B32B 33/00

(54) **REFLECTIVE STRUCTURE AND APPLICATION THEREOF**
REFLEKTIERENDE STRUKTUR UND DEREN VERWENDUNG
STRUCTURE DE RÉFLEXION ET SON APPLICATION

(30) Priority: 29.05.2018 CN 201810535405
(43) Date of publication of application: 09.12.2020
(73) Proprietor: Ningbo Solartron Technology Co., Ltd., Ningbo, Zhejiang 315031 (CN)
(72) Inventor: JIN, Yadong, Ningbo, Zhejiang 315031 (CN); GU, Yong, Ningbo, Zhejiang 315031 (CN); JIANG, Fuyun, Ningbo, Zhejiang 315031 (CN); YANG, Chenghan, Ningbo, Zhejiang 315031 (CN)
(74) Representative: Meyer-Dulheuer MD Legal Patentanwälte PartG mbB
(86) International application number: PCT/CN2018/120987
(87) International publication number: WO 2019/227897

(56) References cited:
- CN-A- 105 109 166
- CN-A- 106 680 919
- CN-A- 106 908 881
- CN-U- 201 707 460
- CN-U- 203 241 561
- CN-U- 206 505 200
- JP-A- H07 181 323
- US-A1- 2003 170 442
- US-A1- 2010 073 611
- US-A1- 2017 235 025

## Description

### CROSS-REFERENCE TO RELATED APPLICATIONS

### TECHNICAL FIELD

The present disclosure relates to the field of optoelectronic technology, and in particular, to reflection structures and their applications.

### BACKGROUND

A backlight module, as an important part of a flat panel display, is mainly divided into a side light type or a straight down type, and a main difference between the two types is an incident mode of the light source. The backlight module with the side light type includes the light source on the side, the direction of the light emitted by the Light Emitting Diode (LED) can change when passing through a light guide plate, part of the light will be directly emitted from the light guide plate, and other part of the light will be directed to the reflection film. The backlight module with the side light type can be composed of a back plate, a reflection film, the light guide plate, a diffusion film, a light-enhancing film, and LED lamp beads (or light bars). The bottom of the backlight module is the back plate and the reflection film. Generally, a thickness of the metal back plate can be in a range of 600 µm to 800 µm, a thickness of the reflection film can be in a range of 50 µm to 500 µm, and a total of the thickness of the metal back plate and the thickness of the reflection film may be in a range of 650 µm to 1300 µm. The weight of the metal back plate may be very large, which greatly increases the weight of the product including the backlight module.

LED is widely applied in the field of lighting and displays with the advantages of power saving, high brightness, and long life. The structure of side emitting LED panel lamps usually includes a metal back plate, a foam layer, a reflection film (i.e. a reflective paper), a light guide plate, a diffuser plate, and a plurality of LED strips (or lamp beads) located around in order from bottom to top. Generally, a thickness of the metal back plate can be in a range of 0.3 mm to 0.5 mm, a thickness of the foam layer can be in a range of 1.0 mm to 1.5 mm, a thickness of the reflection film can be in a range of 0.050 mm to 0.500 mm, a thickness of the light guide plate can be in a range of 2.0 mm to 3.0 mm, and a thickness of the diffusion plate can be about 1.2 mm. An overall thickness of the LED panel lamp can reach to 6 mm to 10 mm. The foam layer can be disposed between the metal back plate and the reflection film (or reflection paper) and play a role in fixing the reflection film and preventing the reflection film from warping due to the heat, but it may significantly increase the thickness of the LED panel lamp. The metal back plate is heavy and it will require a large number of screws to fix the metal back plate, resulting in low assembly efficiency and troublesome rework.

Therefore, in order to meet the market demand, it is necessary to develop light and thin reflection structure or components with certain stiffness.

CN106680919 A discloses a silver plating reflection film, which includes a basic layer, a silver plating layer, a acrylate polymer layer, a protective layer and a diffusion layer, wherein the diffusion layer includes an adhesive and diffusion particles, and the plurality of coating particles are disposed on the protective layer by the adhesive, resulting in the coating layer has a concave and convex surface.

US2010073611A1 discloses an antiglare film including a transparent substrate, a first polarizing layer, a first transparent substrate and an antiglare layer disposed on the first transparent substrate, wherein the antiglare layer includes a binder matrix and particles.

US2017235025A1 discloses an optical film which includes a barrier composite layer, an adhesive layer and an optical film, and the optical film include a first transparent film substrate and a matte layer. The barrier composite layer is made of a second transparent film substrate and a barrier layer. The matte layer contains a binder resin and fine particles. The fine particles include inorganic fine particles such as of silica, clay, talc, calcium carbonate, calcium sulfate, barium sulfate, aluminum silicate, titanium oxide, synthetic zeolite, alumina, smectite and the like, and organic fine particles made of a polyolefin resin such as polypropylene, a polyamide resin such as nylon, an acrylic urethane resin, a styrene resin, a urethane resin, a benzoguanamine resin, a silicone resin or an acrylic resin. The binder resin includes a thermoplastic resin, a thermosetting resin and an ionizing radiation-curing resin such as a polyester resin, an acrylic resin, an acrylic urethane resin, a polyester acrylate resin, a polyurethane acrylate resin, an epoxy acrylate resin, a urethane resin, an epoxy resin, a polycarbonate resin, a cellulose resin, an acetal resin, a polyethylene resin, a polystyrene resin, a polyamide resin, a polyimide resin, a melamine resin, a phenolic resin, a silicone resin or the like.

### SUMMARY

In order to achieve the above object, the present disclosure provides following reflection structures and their applications. The reflection structure can not only be thin and light, but also has a large stiffness. The panel lamp and display including the reflection structure can be lighter in weight, smaller in thickness, and easy to assemble.
A reflection structure can include a reflection layer, an enhancement layer and a light shielding layer stacked together. The reflection layer can include a substrate layer and a coating layer on at least one surface of the substrate layer. The coating layer can include a plurality of coating particles and an adhesive. And the plurality of coating particles are disposed on the at least one surface of the substrate layer by the adhesive in order to form the coating layer, resulting in the coating layer has a concave and convex surface. A material of the substrate layer is at least one of polyethylene terephthalate, polyethylene naphthalate, polycarbonate, polymethyl methyl acrylate, polyethylene, polypropylene, and polystyrene, the adhesive is an acrylate adhesive. A material of the plurality of coating particles is at least one of polyethylene terephthalate, poly-n-butyl methacrylate, poly butylene glycol terephthalate and polyethylene naphthalate. The light shielding layer is at least one of a hot gold foil, a laser film, an ink layer, a composite layer of an oxide and a polymer, and a light shielding plastic film. A material of the enhancement layer is at least one of a flexible glass and/or polypropylene terephthalate, and a density of the reflection structure is in a range of 0.5 g/cm³ to 2.7 g/cm³.

In some embodiments, an average particle size of the plurality of coating particles can be in a range of 5 µm to 80 µm.

In some embodiments, a thickness of the enhancement layer can be in a range of 50 µm to 1000 µm, a thickness of the light shielding layer can be in a range of 10 nm to 250 µm, and a thickness of the reflective layer can be in a range of 55 µm to 580 µm, wherein the thickness of the coating layer can be in a range of 5 µm to 80 µm.

In some embodiments, a light transmittance of the light shielding layer can be less than or equal to 20%,

In some embodiments, the composite layer of the oxide and the polymer can include one oxide layer and one polymer layer stacked; or the composite layer of the oxide and the polymer can include at least two oxide layers and the at least two polymer layers, which are stacked one by one alternately, wherein a material of the oxide layer is at least one of SiOx and AlOx, and a material of the polymer layer is an acrylic polymer.

In some embodiments, the plastic can be at least one of polyethylene terephthalate, polypropylene terephthalate, polybutylene terephthalate, polyethylene naphthalate, polyvinyl chloride, polycarbonate, polyethylene, polypropylene, polystyrene, and polyamide.

In some embodiments, the light shielding layer can be disposed between the reflection layer and the enhancement layer; or
The enhancement layer can be disposed between the reflection layer and the light shielding layer.

In some embodiments, the substrate can include a plurality of micropores.

In some embodiments, the reflection layer can include a PET substrate layer having a plurality of micropores and the coating layer located on a surface of the PET substrate layer, the enhancement layer can be a PET layer, and the light shielding layer is a metal-plated film, wherein the metal-plated film can be a metal-plated PET film.

The reflection structure can not only be thin and light, but also has a high brightness, a large stiffness and light-shielding property. There will be no collapse deformation and light leakage phenomenon. At the same time, the reflective layer includes the coating layer with the concave and convex surface, leading to the functions of anti-adsorption, anti-scratch and anti-top white, etc. In an actual use process, an assembly efficiency and product yield are high.

A panel lamp including a light guide plate and a frame can be further provided. The panel lamp can further include the reflection structure, and the light guide plate and the reflection structure can be fixed by the frame.

The panel lamp including the reflection structure can be lighter in weight, smaller in thickness, and easy to assemble.

A display including a backlight module having a light guide plate and a frame can be further provided. And the backlight module can further include the reflection structure, and the light guide plate and the reflection structure are fixed by the frame.

The display including the reflection structure can be lighter in weight, smaller in thickness, and easy to assemble.

### BRIEF DESCRIPTION OF THE DRAWINGS

FIG. 1 is a cross-sectional view of a reflection structure in one embodiment of the present disclosure;
FIG. 2 is a cross-sectional view of a reflection structure in another embodiment of the present disclosure;
FIG. 3 is a cross-sectional view of a reflection structure in another embodiment of the present disclosure.

In the drawing, 1 represents a reflection layer, 2 represents an enhancement layer, 3 represents a light shielding layer, 11 represents a substrate layer, 12 represents a coating layer, 121 represents a plurality of coating particles, 122 represents an adhesive, and 101 represents micropores.

### DETAILED DESCRIPTION

The present disclosure will be further described in detail below with reference to the drawings and specific embodiments, in order to better understand the reflection structure in the embodiments.

The present disclosure provides a reflection structure in a flat-plate shape. The reflection structure can have the advantages of simplify structure and light weight, such that it can replace the metal back plate and the reflection layer in the backlight module, or the metal back plate, the foam layer and the reflection structure in the side emitting LED panel lamp, to solve the problems such as not thin and light enough, and difficult to assemble, of the panel lamp or flat panel display.

The reflection structure can include a reflection layer 1, an enhancement layer 2, and a light shielding layer 3 that are stacked together.

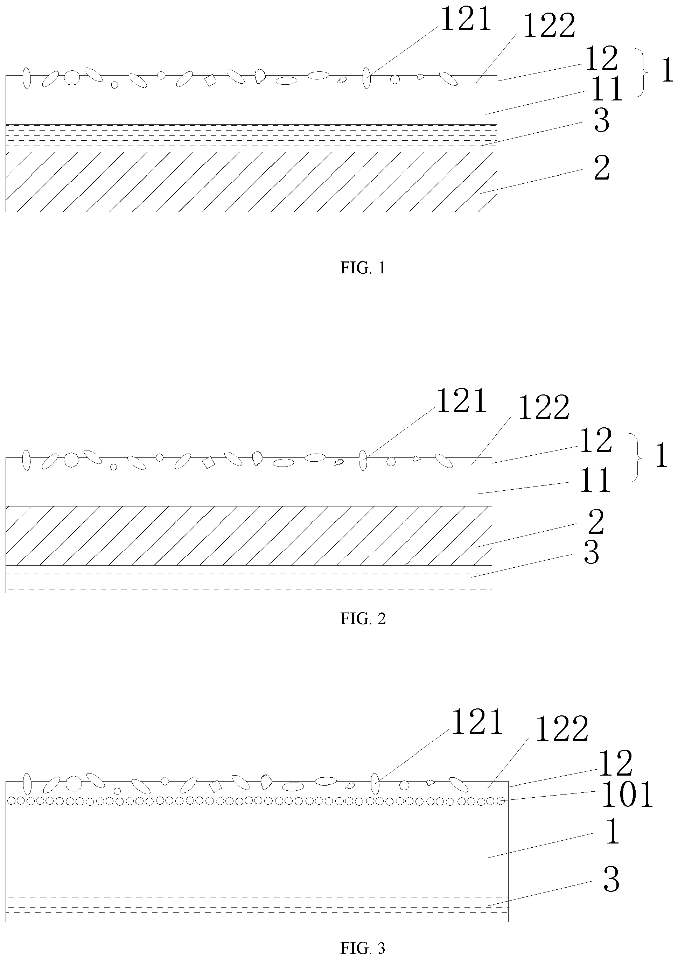

In detail, the reflection structure can have two structures. In one embodiment, referring to FIG. 1, the light shielding layer 3 can be disposed between the reflection layer 1 and the enhancement layer 2. In another embodiment, referring to FIG. 2, the enhancement layer 2 can be disposed between the reflection layer 1 and the light shielding layer 3.

In the reflection structure shown in FIG. 1, the light shielding layer 3 between the reflection layer 1 and the enhancement layer 2 can be protected in order to prevent any light leakage when the light shielding layer 3 may be scratched.

In detail, the reflection layer 1 can include a substrate layer 11 and a coating layer 12 on at least one surface of the substrate layer 11. The coating layer can include a plurality of coating particles 121 and an adhesive 122, and the plurality of coating particles 121 can be disposed on the surface of the substrate layer 11 by the adhesive 122 in order to form the coating layer 12, resulting in the coating layer 12 has a concave and convex surface. The formation of the concave and convex surface can be as follows: after the plurality of coating particles 121 are mixed with the adhesive, a part surface of the plurality of the coating particles 121 can be exposed to form a protruding structure and at the same time, a plurality of concave structures can be formed between two adjacent coating particles 121 during a coating process,. So that, the coating layer 12 can have the concave and convex surface. Of course, when the coating particles 121 are in different shape and different particle size, a probability of formation of the concave and convex surface will be increased.

Due to the coating layer 12 formed on the surface of the substrate layer 11, the substrate layer 11 can be protected from being scratched during transportation, etc. At the same time, the coating layer having the concave and convex surface can prevent absorption of the reflection structure and light guide plate with a smooth surface, and a phenomenon of top white of the substrate layer 11 due to an external force or pressure of the light guide plate during the assembly process.

Considering that if the particle size of the coating particles 121 is too small, it cannot play the role of anti-top white, anti-scratch and anti-adsorption, and if the particle size is too large, it may affect the reflective structure being thinner and lighter and moreover, the coating particles 121 may burst and break out under the external force, causing damage to the reflection structure and the light guide plate, the average particle size of the coating particles can preferably be in a range of 5 µm to 80 µm.

In the actual use process, if the coating particles 121 are too soft, the coating layer 12 cannot play a good role of anti-top white, that is, under the external force or during the installation of the light guide plate, the phenomenon of top white may occur on the substrate layer 11; and if the coating particles 121 are too hard, such as selected as inorganic material, the coating particles 121 will scratch the light guide plate during the assembly process. AA material of the coating particles can be at least one of polyethylene terephthalate, polymethyl methacrylate, poly-n-butyl methacrylate, poly butylene glycol terephthalate, polyethylene naphthalate, polypropylene, polyethylene, and polyamide. The shape of the coating particles 121 will be not limited, such as regular or irregular. Preferably, the coating particles 121 can have a regular shape, such as a spherical or ellipsoidal shape.

The adhesive 122 is an acrylate adhesive.

In the coating layer 12, the dispersion form of the coating particles 121 is mono-disperse or poly-disperse by the adhesive 122, and preferably, if poly-disperse, it can have better effects of anti-top white, anti-adsorption, and anti-scratch.

Mass percentages of the coating particles 121 and the adhesive 122 in the coating layer 12 are not limited. Considering the function of the coating layer 12 and its effect upon the lightening, thinning and stiffness of the reflection structure, the mass percentage of the coating particles 121 in the coating layer 12 can be preferably in a range of 0.5% to 40%.

Preferably, a material of the substrate layer can be at least one of polyethylene terephthalate, polyethylene naphthalate, polycarbonate, polymethyl methyl acrylate, polyethylene, polypropylene, and polystyrene, which is not only light and thin, but also has a small coefficient of thermal expansion, a small density, and high strength.

In the reflection structure, a thickness of the enhancement layer 2 can be in a range of 50 µm to 1000 µm. A thickness of the light shielding layer 3 can be in a range of 10 nm to 250 µm, preferably, in a range of 200 nm to 250 µm, and more preferably, in a range of 1 µm to 250 µm. A thickness of the reflection layer 1 can be in a range of 55 µm to 580 µm. And a thickness of the coating layer 12 can be in a range of 5µm to 80 µm.

In some embodiments, in order to prevent the reflection structure collapsing and deforming, a ratio of the thickness of the reflection structure may be defined. A ratio of a sum of the thickness of the enhancement layer 2 and the thickness of the light shielding layer 3 to the thickness of the reflection layer 1 can be greater than 0.55:1.

Furthermore, the ratio of the sum of the thickness of the enhancement layer 2 and the thickness of the light shielding layer 3 to the thickness of the reflection layer 1 can be in a range of 0.6:1 to 1.8:1. Such that the thickness, relative brightness, weight, stiffness and light-shielding property of the reflection structure can reach a relatively excellent state.

In the reflection structure, a light transmittance of the light shielding layer 3 can be less than or equal to 20%. When meeting the requirement of the light transmittance of the light shielding layer 3 being less than or equal to 20%, the reflection structure can have a good light shielding property. If considering more demanding application environment and requirements, the light transmittance of the light shielding layer 3 can be preferably less than or equal to 15%, and further more preferably, the light transmittance of the light shielding layer 3 can be less than or equal to 12%.

The light shielding layer 3 can be at least one of a metal layer, a metal plated film, a hot gold foil, a laser film, an ink layer, a composite layer of an oxide and a polymer, and a light shielding plastic film. The light shielding layer 3 has a good light shielding effect by controlling the light shielding rate and thickness. And it will improve the workability and transportation convenience of the reflection structure.

When the light shielding layer 3 is the metal layer, the light shielding layer 3 can be a metal foil formed by extending a metal material, or formed by directly depositing a metal material on the enhancement layer 2. The depositing method can be a physical depositing method or a chemical depositing method. Preferably, the depositing method can be the physical depositing method. The physical depositing method is at least one of electroplating, evaporation, or sputtering. The metal material can be at least one of Al, Cu, Zn, Ag, and Au, and preferably, the metal material can be Al.

The metal plated film can include a metal layer and a film based layer. A material of the metal layer can be at least one of Al, Cu, Zn, Ag, and Au. Preferably, the material of the metal layer can be Al. A material of the film based layer can be at least one of polyethylene terephthalate (PET), polypropylene terephthalate (PPT), polybutylene terephthalate (PBT), polyethylene naphthalate (PEN), polyvinyl chloride (PVC), polycarbonate (PC), polyethylene (PE), polypropylene (PP), polystyrene (PS), and polyamide (PA). Preferably, the material of the film based layer can be polyethylene terephthalate (PET).

The composite layer of the oxide and the polymer can include at least one oxide layer and at least one polymer layer. For example, in one embodiment, the composite layer of the oxide and the polymer can include one oxide layer and one polymer layer stacked. In another embodiment, the composite layer of the oxide and the polymer can include at least two oxide layers and the at least two polymer layers, such as by coating process, which are stacked one by one alternately. The material of the oxide layer can be at least one of SiOx and AlOx, and the material of the polymer layer can be an acrylic polymer.

The material of the ink layer can be light shielding ink.

The light shielding plastic film can be made of plastic and a pigment. The plastic can be at least one of PET, PPT, PBT, PEN, PVC, PC, PE, PP, PS, and PA. Preferably, the plastic can be PET. The pigment can be at least one of titanium dioxide and carbon black, preferably, a combination of the titanium dioxide and carbon black.

In the reflection structure, a material of the enhancement layer can be at least one of glass and plastic.

And the glass can be flexible glass.

The material of the plastic can be at least one of PET, PPT, PBT, PEN, PVC, PC, PE, PP, PS, and PA.

In some embodiments, a plurality of micropores can be distributed in the substrate layer 11. The plurality of micropores can be evenly distributed in the substrate layer 11 and the pore size of the plurality of micropores is uniform. The plurality of the micropores can be formed in the process of preparing the substrate layer 11. The inside of the plurality of the micropores can be air, and the refractive index can be only 1.0. There can be a huge refractive index difference between the material of the substrate layer 11 and the inside of the plurality of the micropores. Therefore, when light passes through the micropores inside the substrate layer 11, reflection, refraction and re-reflection will occur, thereby enhancing a reflection efficiency of the substrate layer 11. In addition, the plurality of the micropores can play a role of scattering light, resulting in whitening the substrate layer 11 and forming a white film.

In one embodiment, when the substrate layer 11 is a silver reflection film (i.e. Enhanced Specular Reflector), since the silver reflection film can be composed of thousands or even tens of thousands of layers of plastic films, there are no micropores in the silver reflection film. When light hits the surface of the silver reflection film and enters the inside of the silver reflection film, the light will be refracted, reflected, re-refracted, and re-reflected thousands of times or even tens of thousands of times. It is difficult to pass through the silver reflection film, and eventually it will be reflected back. The reflection efficiency of silver reflection film can be extremely high.

In order to ensure the stiffness of the enhancement layer 2 and even the stiffness of the reflection structure, the enhancement layer 2 does not include any microporous.

The reflection structure can further include an adhesive layer, and the thickness of the adhesive layer can be in a range of 1 µm to 50 µm. The reflection layer 1, the enhancement layer 2 and the light shielding layer 3 can be stacked together by the adhesive layer.

A material of the adhesive layer can be at least one of thermal curing adhesive, optical curing adhesive or pressure sensitive adhesive.

The thermal curing adhesive can be selected from at least one of acrylic resin, urethane resin, epoxy resin, polyester resin, and silicone resin.

The optical curing adhesive can be selected from at least one of epoxy acrylate, urethane acrylate, polyether acrylate, polyester acrylate, and acrylic resin.

The pressure sensitive adhesive can be selected from at least one of acrylic pressure sensitive adhesive, polyurethane pressure sensitive adhesive, polyurethane modified acrylic pressure sensitive adhesive, OCA optical adhesive, silicone modified polyurethane pressure sensitive adhesive, and silicone modified acrylic pressure sensitive adhesive.

Of course, the reflection structure may also be an integrate structure. Referring to FIG. 3, the reflection structure can include a reflection layer 1 having a first surface and a second surface opposite to each other. Furthermore, the reflection layer 1 can include the plurality of micropores 101 distributed near the first surface. The light shielding layer 3 can be provided on or close to the second surface of the reflection layer 1. And the coating layer 12 can be provided on or close to the first surface of the reflection layer 1.

It can be understood that when a part of the reflection layer 1 close to the first surface is composed of thousands or even tens of thousands of layers of plastic film, a structure similar to the silver reflection film (i.e. Enhanced Specular Reflector) can be formed. There can be no micropore distribution close to the first surface. Even, as the proportion of the silver reflection film in the reflection layer 1 increases, that is, the reflection layer 1 is composed of thousands or even tens of thousands of layers of plastic films from the first surface to the second surface, the thickness of the light shielding layer 3 can be reduced or even eliminated when the requirement of reflectivity is satisfied. And the coating layer 12 can be preferably provided on or close to the first surface of the reflection layer 1.

Therefore, a density of the reflection structure can be in a range of 0.5 g/cm³ to 2.7 g/cm³ by selecting the thickness and materials of the reflection layer 1, the enhancement layer 2 and the light shielding layer 3. Due to the density in this range, the reflection structure can not only satisfy the stiffness requirements, but also can be thinner and lighter.

Specifically, in order to prevent the reflection structure from warping for a long time, the thickness of the light shielding layer 3 and a coefficient of thermal expansion of the reflection structure may be limited. Under a temperature of 30 degrees centigrade to 80 degrees centigrade, a coefficient of thermal expansion of the reflection structure in a longitudinal direction can be in a range of 10⁻⁶ cm/(cm·°C) to 10⁻⁴ cm/(cm·°C), and a coefficient of thermal expansion of the reflection structure in a lateral direction can be in a range of 10⁻⁶ cm/(cm·°C) to 10⁻⁴ cm/(cm·°C).

In detail, under a temperature of 30 degrees centigrade to 80 degrees centigrade, a coefficient of thermal expansion of the reflection layer 1 in a longitudinal direction can be in a range of 10⁻⁶ cm/(cm·°C) to 10⁻⁴ cm/(cm·°C), and a coefficient of thermal expansion of the reflection layer 1 in a lateral direction can be in a range of 10⁻⁶ cm/(cm·°C) to 10⁻⁴ cm/(cm·°C).

Under a temperature of 30 degrees centigrade to 80 degrees centigrade, a coefficient of thermal expansion of the enhancement layer 2 in a longitudinal direction can be in a range of 10⁻⁶ cm/(cm·°C) to 10⁻⁴ cm/(cm·°C) , and a coefficient of thermal expansion of the enhancement layer 2 in a lateral direction can be in a range of 10⁻⁶ cm/(cm·°C) to 2×10⁻⁴ cm/(cm °C).

Under a temperature of 30 degrees centigrade to 80 degrees centigrade, a coefficient of thermal expansion of the light shielding layer 3 can be in a range of 10⁻⁷ cm/(cm·°C) to 3.0×10⁻⁴ cm/(cm·°C).

It can be understood that the differences of the coefficient of thermal expansion in a lateral direction between the reflection layer 1, the enhancement layer 2 and the light shielding layer 3 and the differences of the coefficient of thermal expansion in a longitudinal direction between the reflection layer 1, the enhancement layer 2 and the light shielding layer 3 can be controlled as small as possible. Therefore, during the long-term use, light leakage or collapse can be prevented due to the small difference of thermal expansion property between the layers of the reflection structure.

Preferably, when the reflection layer 1, the enhancement layer 2 or the light shielding layer 3 with a large coefficient of thermal expansion is used, the thickness of the reflection layer 1, the enhancement layer 2 or the light shielding layer 3 will be correspondingly thinned to prevent the reflection layer 1, the enhancement layer 2 and the light shielding layer 3 being peeled off due to thermal expansion.

Preferably, the materials of the reflection layer 1, the enhancement layer 2 and the light shielding layer 3 can be made of the same material.

For example, in one embodiment, the reflection layer can include a PET layer with a plurality of micropores distributed therein, the enhancement layer can be a PET layer, and the light shielding layer can be a metal plated film, such as a metal plated PET film.

Furthermore, the metal plated PET film can be aluminum plated PET film. Therefore, the coefficient of thermal expansion and other parameters between the reflection layer 1, the enhancement layer 2 and the light shielding layer 3 can be kept in better consistency, so that the reflection structure will not cause light leakage, collapse or other phenomena due to different thermal expansion during long-term use.

Therefore, the reflection structure of the present disclosure has the advantages of light weight, small thickness, good stiffness, good shading rate, high brightness, and easy assembly, and at the same time, can effectively reduce transportation costs and processing difficulties.

The present disclosure also provides a panel lamp including a light guide plate and a frame. The panel lamp can further include the reflection structure, and the light guide plate and the reflection structure can be fixed by the frame. Therefore, the panel lamp with the reflection structure can be lighter in weight, smaller in thickness and easy to assemble.

The present disclosure also provides a display including a backlight module. The backlight module can include a light guide plate and a frame. Furthermore, the backlight module can also include the reflection structure. The light guide plate and the reflection structure can be fixed by the frame. Therefore, the display including the reflection structure can be lighter in weight, thinner in thickness and easy to assemble.

Hereinafter, the reflection structure and its application will be further described through the following specific embodiments.

The reflection structure provided by the present disclosure can be mainly tested and evaluated its following properties:
(1) Thickness: along the thickness direction of the reflection structure, using a micrometer to test the thickness of corresponding positions every 50 mm, and measuring the thickness of 5 positions in total, and calculating the average value to obtain the thickness.
(2) Stiffness: cutting the reflection structure to the corresponding size and shape, replacing the metal back plate and the reflection film in the backlight module (size: 43 inches), or the metal back plate, the foam layer and the reflection film in the panel lamp (size: 600 mm × 600 mm) with the reflection structure, and observing whether the reflection structure collapses and deforms.
(3) Shading: cutting the reflection structure to the corresponding size and shape, replacing the metal back plate and the reflection film in the backlight module (size: 43 inches), or the metal back plate, the foam layer and the reflection film in the panel lamp (size: 600 mm × 600 mm) with the reflection structure, lighting the backlight module, and observing if there is any light leakage from the backlight module and the back of the panel lamp. If no light leakage, it will prove that the reflection structure has good shading property; otherwise, it means that the reflection structure has poor shading property.
(4) Relative brightness: cutting the reflection structure to the corresponding size and shape, replacing the metal back plate and the reflection film in the backlight module (size: 43 inches), or the metal back plate, the foam layer and the reflection film in the panel lamp (size: 600 mm × 600 mm) with the reflection structure, and lighting the panel lamp and the backlight module. The brightness of 9 locations on the panel lamp and the backlight module is tested by BM-7A luminance meter made by Japan Topcon and calculated the average value to obtain the brightness L of the panel lamp and the backlight module. The brightness L₀ of the above backlight module (size: 43 inches) and the above panel lamp (size: 600 mm × 600 mm) is tested in the same way. A relative brightness of the backlight module and the panel lamp is obtained by the formula of 100×L/L₀. The larger the value of the relative brightness is, the higher the brightness of the backlight module and the panel lamp is.
(5) Weight: weighing the above backlight module (size: 43 inches) and the above panel lamp (size: 600 mm × 600 mm) using an electronic scale, cutting the reflection structure to a size of 570 mm × 570 mm and replacing the metal back plate and the reflection film in the backlight module, or the metal back plate, the foam layer and the reflection film in the above panel lamp (size: 600 mm × 600 mm) with the reflection structure (size: 570 mm × 570 mm), using the electronic scale to weigh the backlight module including the reflection structure and the panel lamp including the reflection structure.

### Embodiment 1

Referring to FIG. 2, a reflection structure in Embodiment 1 includes a reflection layer 1, a light shielding layer 3, and an enhancement layer 3 disposed between the reflection layer 1 and the light shielding layer 3. The reflection layer 1 includes a substrate layer 11 and a coating layer 12 disposed on a surface of the substrate layer 11, wherein the substrate layer 11 is a PET reflection film with a thickness of 250 µm, and the coating layer 12 is formed by disposing a plurality of irregular and poly-disperse PET particles 121 with an average particle size of 40 µm on the surface of the substrate layer 11 via the acrylate adhesive 122. The enhancement layer 2 is a PET film with a thickness of 188 µm. The light shielding layer 3 is an Al plated PET film. The reflection layer 1, the enhancement layer 2 and the light shielding layer 3 are stacked together by an adhesive layer. The thickness of the adhesive layer is 1 µm. And a material of the adhesive layer is acrylic resin thermosetting adhesive.

### Embodiment 2

A reflection structure in Embodiment 2 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of monodisperse spherical PMMA particles with an average particle size of 5 µm, the enhancement layer 2 is a PET film with a thickness of 50 µm, and the light shielding layer 3 is an Al metal layer with a thickness of 1 µm formed by electroplating.

### Embodiment 3

A reflection structure in Embodiment 3 is substantially the same as the reflection structure in Embodiment 1, except that, the substrate layer 11 in the reflection layer 1 is a PET reflection film with a thickness of 150 µm, the coating layer 12 on a surface of the substrate layer 11 includes a plurality of irregular and poly-disperse PET particles with an average particle size of 40 µm, the enhancement layer 2 is a PET film with a thickness of 188 µm, and the light shielding layer 3 is an Al plated PET film with a thickness of 15 µm.

### Embodiment 4

A reflection structure in Embodiment 4 is substantially the same as the reflection structure in Embodiment 1, except that, the substrate layer 11 in the reflection layer 1 is a PET reflection film with a thickness of 188 µm, the coating layer 12 on a surface of the substrate layer 11 includes a plurality of irregular and poly-disperse PET particles with an average particle size of 40 µm, the enhancement layer 2 is a PET film with a thickness of 188 µm, and the light shielding layer 3 is an Al plated PET film with a thickness of 15 µm.

### Embodiment 5

A reflection structure in Embodiment 5 is substantially the same as the reflection structure in Embodiment 1, except that, the substrate layer 11 in the reflection layer 1 is a PET reflection film with a thickness of 300 µm, the coating layer 12 on a surface of the substrate layer 11 includes a plurality of irregular and poly-disperse PET particles with an average particle size of 40 µm, the enhancement layer 2 is a PET film with a thickness of 188 µm, and the light shielding layer 3 is an Al plated PET film with a thickness of 15 µm.

### Embodiment 6

A reflection structure in Embodiment 6 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of mono-disperse spherical PET particles with an average particle size of 10 µm, the enhancement layer 2 is a PET film with a thickness of 188 µm, and the light shielding layer 3 is an Al plated PET film with a thickness of 15 µm.

### Embodiment 7

A reflection structure in Embodiment 7 is substantially the same as the reflection structure in Embodiment 1, except that, the substrate layer 11 in the reflection layer 1 is a PET reflection film with a thickness of 500 µm, the coating layer 12 on a surface of the substrate layer 11 includes a plurality of irregular and poly-disperse PET particles with an average particle size of 80 µm, the enhancement layer 2 is a PET plastic sheet with a thickness of 1000 µm, and the light shielding layer 3 is an Al foil with a thickness of 250 µm.

### Embodiment 8

A reflection structure in Embodiment 8 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of irregular and poly-disperse PET particles with an average particle size of 40 µm, the enhancement layer 2 is a PET film with a thickness of 225 µm, and the light shielding layer 3 is an Al plated PET film with a thickness of 15 µm.

### Embodiment 9

A reflection structure in Embodiment 9 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of irregular and poly-disperse PET particles with an average particle size of 40 µm, the enhancement layer 2 is a PET film with a thickness of 250 µm, and the light shielding layer 3 is an Al plated PET film with a thickness of 15 µm.

### Embodiment 10

A reflection structure in Embodiment 10 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of irregular and poly-disperse PET particles with an average particle size of 40 µm, the enhancement layer 2 is a PET film with a thickness of 300 µm, and the light shielding layer 3 is an Al plated PET film with a thickness of 15 µm.

### Embodiment 11

A reflection structure in Embodiment 11 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of irregular and poly-disperse PET particles with an average particle size of 40 µm, the enhancement layer 2 is a PET film with a thickness of 500 µm, and the light shielding layer 3 is an Al plated PET film with a thickness of 15 µm.

### Embodiment 12

A reflection structure in Embodiment 12 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of irregular and poly-disperse PET particles with an average particle size of 40 µm, the enhancement layer 2 is a PET film with a thickness of 188 µm, and the light shielding layer 3 is a laser film with a thickness of 15 µm.

### Embodiment 13

A reflection structure in Embodiment 13 is substantially the same as the reflection structure in Embodiment 1, except that, the substrate layer 11 in the reflection layer 1 is a PP reflection film with a thickness of 250 µm, the coating layer 12 on a surface of the substrate layer 11 includes a plurality of irregular and poly-disperse PP particles with an average particle size of 40 µm, the enhancement layer 2 is a PP film with a thickness of 188 µm, and the light shielding layer 3 is a hot gold foil with a thickness of 15 µm.

### Embodiment 14

A reflection structure in Embodiment 14 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of irregular and poly-disperse PET particles with an average particle size of 40 µm, the enhancement layer 2 is a PET film with a thickness of 188 µm, and the light shielding layer 3 is an ink layer including Al with a thickness of 10 µm.

### Embodiment 15

A reflection structure in Embodiment 15 is substantially the same as the reflection structure in Embodiment 1, except that, the substrate layer 11 in the reflection layer 1 is a PET reflection film with a thickness of 250 µm, the coating layer 12 on a surface of the substrate layer 11 includes a plurality of irregular and poly-disperse PET particles with an average particle size of 40 µm, the enhancement layer 2 is a PET film with a thickness of 188 µm, and the light shielding layer 3 is an Al-plated PEN film including Al with a thickness of 15 µm.

### Embodiment 16 to Embodiment 30

A reflection structure in Embodiment 16 to Embodiment 30 are substantially the same as the reflection structure in Embodiment 1 to Embodiment 15 in order and respectively, except that the light shielding layer 3 is located between the reflection layer 1 and the enhancement layer 2.

### Comparative Embodiment 1

A backlight module (size: 43 inches) including a metal back plate and a reflection film is provided. A thickness of the metal back plate is 250 µm, and a thickness of the reflection film is 300 µm. And the reflection film includes a substrate layer and a coating layer disposed on a surface of the substrate layer, wherein a thickness of the substrate layer is 250 µm, and the coating layer includes a plurality of irregular and poly-disperse PET particles with an average particle size of 50 µm.

### Comparative Embodiment 2

A reflection structure of a panel lamp in Comparative Embodiment 2 includes a metal back plate, a foam layer and a reflection film, wherein a thickness of the metal back plate is 400 µm, a thickness of the foam layer is 1500 µm, and a thickness of the reflection film is 300 µm. And the reflection film includes a substrate layer and a coating layer disposed on a surface of the substrate layer, wherein a thickness of the substrate layer is 250 µm, and the coating layer includes a plurality of irregular and poly-disperse PET particles with an average particle size of 50 µm.

The reflection structures of Embodiment 1 to Embodiment 15 are applied in the backlight modules (size: 43 inches), the thickness, stiffness, light-shielding property, relative brightness and weight of the backlight modules corresponding to Embodiment 1 to Embodiment 15 and the backlight module of Comparative Embodiment 1 were tested. The test results were shown in Table 1.

**Table 1**

| | total Thickness (µm) | Density (g/cm³) | Light transmittance (%) | Collapse deformation | Shading | Relative brightness (%) | Weight /kg |
|---|---|---|---|---|---|---|---|
| Embodiment 1 | 495 | 1.21 | 1.02 | N | N | 103 | 3.3 |
| Embodiment 2 | 108 | 1.03 | 12.85 | N | N | 100 | 3.1 |
| Embodiment 3 | 395 | 1.16 | 1.31 | N | N | 104 | 3.3 |
| Embodiment 4 | 433 | 1.19 | 1.15 | N | N | 102 | 3.3 |
| Embodiment 5 | 545 | 1.18 | 0.94 | N | N | 105 | 3.4 |
| Embodiment 6 | 465 | 1.22 | 1.02 | N | N | 108 | 3.3 |
| Embodiment 7 | 1832 | 1.33 | 1.25 | N | N | 106 | 4.3 |
| Embodiment 8 | 532 | 1.20 | 0.90 | N | N | 104 | 3.4 |
| Embodiment 9 | 557 | 1.25 | 0.82 | N | N | 105 | 3.4 |
| Embodiment 10 | 607 | 1.23 | 0.93 | N | N | 103 | 3.4 |
| Embodiment 11 | 807 | 1.19 | 1.04 | N | N | 105 | 3.6 |
| Embodiment 12 | 495 | 1.03 | 8.45 | N | N | 101 | 3.3 |
| Embodiment 13 | 495 | 1.07 | 7.62 | N | N | 103 | 3.3 |
| Embodiment 14 | 490 | 1.06 | 10.32 | N | N | 102 | 3.3 |
| Embodiment 15 | 495 | 1.08 | 3.47 | N | N | 103 | 3.3 |
| Comparative Embodiment 1 | 1100 | / | / | / | / | 99 | 5.6 |

The reflection structures of Embodiment 1 to Embodiment 15 are applied in the panel lamps (size: 600 mm × 600 mm), the thickness, stiffness, light-shielding property, relative brightness and weight of the panel lamps corresponding to Embodiment 1 to Embodiment 15 and the panel lamp of Comparative Embodiment 2 were tested. The test results were shown in Table 2.

**Table 2**

| | total Thickness (µm) | Density (g/cm³) | Light transmittance (%) | Collapse deformation | Shadin g | Relative brightness (%) | Weight /kg |
|---|---|---|---|---|---|---|---|
| Embodiment 1 | 495 | 1.21 | 1.02 | N | N | 103 | 1.9 |
| Embodiment 2 | 108 | 1.03 | 12.85 | N | N | 100 | 1.8 |
| Embodiment 3 | 395 | 1.16 | 1.31 | N | N | 104 | 1.9 |
| Embodiment 4 | 433 | 1.19 | 1.15 | N | N | 102 | 1.9 |
| Embodiment 5 | 545 | 1.18 | 0.94 | N | N | 105 | 2.0 |
| Embodiment 6 | 465 | 1.22 | 1.02 | N | N | 108 | 1.9 |
| Embodiment 7 | 1832 | 1.33 | 1.25 | N | N | 106 | 2.6 |
| Embodiment 8 | 532 | 1.20 | 0.90 | N | N | 104 | 2.0 |
| Embodiment 9 | 557 | 1.25 | 0.82 | N | N | 105 | 2.0 |
| Embodiment 10 | 607 | 1.23 | 0.93 | N | N | 103 | 2.0 |
| Embodiment 11 | 807 | 1.19 | 1.04 | N | N | 105 | 2.1 |
| Embodiment 12 | 495 | 1.03 | 8.45 | N | N | 101 | 1.9 |
| Embodiment 13 | 495 | 1.07 | 7.62 | N | N | 103 | 1.9 |
| Embodiment 14 | 490 | 1.06 | 10.32 | N | N | 102 | 1.9 |
| Embodiment 15 | 495 | 1.08 | 3.47 | N | N | 103 | 1.9 |
| Comparative Embodiment 2 | 1100 | / | / | / | / | 97 | 2.6 |

As shown in Table 1 and Table 2, the reflection structures provided by the present disclosure have a small thickness, high brightness, good stiffness, and great light shielding property (or shading property), and the assembled panel lamp can be light in weight.

The thickness, stiffness, light-shielding property, relative brightness, and weight of the reflection structures of Embodiment 16 to Embodiment 30 were tested, and the test results in Table 2 were substantially the same as those of Embodiment 1 to Embodiment 15 in Table 1, except that the weight. It can be seen that the position of the light shielding layer in the reflection structure has no effect on the thickness, stiffness, light-shielding property, relative brightness, and weight of the reflection structure.

The reflection structures of Embodiment 1 to Embodiment 30 were taken a friction test, and the test condition was 1 kg. When repeating 200 times of rubbing, the test result is that all of the reflection structures are opaque. When repeating 500 times of rubbing, the test result is the reflection structures of Embodiment 1 to Embodiment 15 are opaque, and parts of the reflection structures of Embodiment 16 to Embodiment 30 are slightly non-opaque.

The reflection structures of Embodiment 1 to Embodiment 15 were tested for the coefficient of thermal expansion. The test was performed using an American TA thermal analyzer with a model number of TMA Q400. The test results were shown in Table 3.

**Table 3**

| | Reflection structure (cm/(cm·°C)) | Reflection layer (cm/(cm·°C)) | Enhancement layer (cm/(cm·°C)) | Light shielding layer (cm/(cm·°C)) |
|---|---|---|---|---|
| Embodiment 1 | MD: 2.79×10⁻⁵ | MD: 2.76×10⁻⁵ | MD: 2.73×10⁻⁵ | 2.81×10⁻⁵ |
| | TD: 2.07×10⁻⁵ | TD: 1.83×10⁻⁵ | TD: 1.78×10⁻⁵ | |
| Embodiment 2 | MD: 2.76×10⁻⁵ | MD: 2.72×10⁻⁵ | MD: 2.70×10⁻⁵ | 2.86×10⁻⁵ |
| | TD: 2.09×10⁻⁵ | TD: 1.84×10⁻⁵ | TD: 1.80×10⁻⁵ | |
| Embodiment 3 | MD: 2.74×10⁻⁵ | MD: 2.73×10⁻⁵ | MD: 2.71×10⁻⁵ | 2.75×10⁻⁵ |
| | TD: 2.05×10⁻⁵ | TD: 1.84×10⁻⁵ | TD: 1.74×10⁻⁵ | |
| Embodiment 4 | MD: 2.76×10⁻⁵ | MD: 2.75×10⁻⁵ | MD: 2.76×10⁻⁵ | 2.77×10⁻⁵ |
| | TD: 2.06×10⁻⁵ | TD: 1.80×10⁻⁵ | TD: 1.73×10⁻⁵ | |
| Embodiment 5 | MD: 2.77×10⁻⁵ | MD: 2.78×10⁻⁵ | MD: 2.77×10⁻⁵ | 2.76×10⁻⁵ |
| | TD: 2.05×10⁻⁵ | TD: 1.82×10⁻⁵ | TD: 1.73×10⁻⁵ | |
| Embodiment 6 | MD: 2.75×10⁻⁵ | MD: 2.74×10⁻⁵ | MD: 2.70×10⁻⁵ | 2.80×10⁻⁵ |
| | TD: 2.09×10⁻⁵ | TD: 1.80×10⁻⁵ | TD: 1.73×10⁻⁵ | |
| Embodiment 7 | MD: 2.81×10⁻⁵ | MD: 2.78×10⁻⁵ | MD: 2.79×10⁻⁵ | 2.84×10⁻⁵ |
| | TD: 2.11×10⁻⁵ | TD: 1.89×10⁻⁵ | TD: 1.85×10⁻⁵ | |
| Embodiment 8 | MD: 2.74×10⁻⁵ | MD: 2.70×10⁻⁵ | MD: 2.77×10⁻⁵ | 2.76×10⁻⁵ |
| | TD: 2.03×10⁻⁵ | TD: 1.79×10⁻⁵ | TD: 1.72×10⁻⁵ | |
| Embodiment 9 | MD: 2.74×10⁻⁵ | MD: 2.72×10⁻⁵ | MD: 2.78×10⁻⁵ | 2.78×10⁻⁵ |
| | TD: 2.05×10⁻⁵ | TD: 1.85×10⁻⁵ | TD: 1.71×10⁻⁵ | |
| Embodiment 10 | MD: 2.78×10⁻⁵ | MD: 2.71×10⁻⁵ | MD: 2.77×10⁻⁵ | 2.80×10⁻⁵ |
| | TD: 2.06×10⁻⁵ | TD: 1.86×10⁻⁵ | TD: 1.72×10⁻⁵ | |
| Embodiment 11 | MD: 2.75×10⁻⁵ | MD: 2.73×10⁻⁵ | MD: 2.77×10⁻⁵ | 2.81×10⁻⁵ |
| | TD: 2.10×10⁻⁵ | TD: 1.80×10⁻⁵ | TD: 1.72×10⁻⁵ | |
| Embodiment 12 | MD: 2.77×10⁻⁵ | MD: 2.75×10⁻⁵ | MD: 2.79×10⁻⁵ | 2.76×10⁻⁵ |
| | TD: 2.08×10⁻⁵ | TD: 1.85×10⁻⁵ | TD: 1.71×10⁻⁵ | |
| Embodiment 13 | MD: 2.75×10⁻⁵ | MD: 2.74×10⁻⁵ | MD: 2.71×10⁻⁵ | 2.79×10⁻⁵ |
| | TD: 2.09×10⁻⁵ | TD: 1.87×10⁻⁵ | TD: 1.75×10⁻⁵ | |
| Embodiment 14 | MD: 2.75×10⁻⁵ | MD: 2.73×10⁻⁵ | MD: 2.76×10⁻⁵ | 2.74×10⁻⁵ |
| | TD: 2.10×10⁻⁵ | TD: 1.86×10⁻⁵ | TD: 1.74×10⁻⁵ | |
| Embodiment 15 | MD: 2.75×10⁻⁵ | MD: 2.74×10⁻⁵ | MD: 2.72×10⁻⁵ | 2.76×10⁻⁵ |
| | TD: 2.09×10⁻⁵ | TD: 1.86×10⁻⁵ | TD: 1.72×10⁻⁵ | |

In Table 3, MD represents a coefficient of thermal expansion in a longitudinal direction, and TD represents a coefficient of thermal expansion in a lateral direction. It can be seen from Table 3 that the coefficient of thermal expansion in the longitudinal direction and the coefficient of thermal expansion in the lateral direction of the reflection structure are both small. Therefore, the reflection structure will not be thermal warpage, deformation and other adverse phenomena even for a long time. Moreover, the differences of the coefficient of thermal expansion in the longitudinal direction between the reflection layer 1, the enhancement layer 2 and the light shielding layer 3 are small, and so as the differences of the coefficient of thermal expansion in the lateral direction between the reflection layer 1, the enhancement layer 2 and the light shielding layer 3. Therefore, during the long-term use, light leakage or collapse can be prevented due to the small difference of thermal expansion property between the layers of the reflection structure.

## Claims

1. A reflection structure, comprising a reflection layer (1), an enhancement layer (2) and a light shielding layer (3) stacked together, wherein the reflection layer (1) comprises a substrate layer (11) and a coating layer (12) on at least one surface of the substrate layer (11), the coating layer (12) comprises a plurality of coating particles (121) and an adhesive (122), a material of the substrate layer (11) is at least one of polyethylene terephthalate, polyethylene naphthalate, polycarbonate, polymethyl methyl acrylate, polyethylene, polypropylene, and polystyrene, the adhesive (122) is an acrylate adhesive, and the plurality of coating particles (121) are disposed on the at least one surface of the substrate layer (11) by the adhesive (122) in order to form the coating layer (12), resulting in the coating layer (12) has a concave and convex surface,
**characterized in that**,
a material of the plurality of coating particles (121) is at least one of polyethylene terephthalate, poly-n-butyl methacrylate, poly butylene glycol terephthalate and polyethylene naphthalate;
wherein the light shielding layer (3) is at least one of a hot gold foil, a laser film, an ink layer, a composite layer of an oxide and a polymer, and a light shielding plastic film;
wherein a material of the enhancement layer (2) is at least one of a flexible glass and/or polypropylene terephthalate, and
wherein a density of the reflection structure is in a range of 0.5 g/cm³ to 2.7 g/cm³.

2. The reflection structure of claim 1, wherein an average particle size of the plurality of coating particles (121) is in a range of 5 µm to 80 µm.

3. The reflection structure of claim 1, wherein a thickness of the enhancement layer (2) is in a range of 50 µm to 1000 µm, a thickness of the light shielding layer (3) is in a range of 10 nm to 250 µm, and a thickness of the reflective layer is in a range of 55 µm to 580 µm, wherein the thickness of the coating layer (12) is in a range of 5 µm to 80 µm.

4. The reflection structure of claim 1, wherein a light transmittance of the light shielding layer (3) is less than or equal to 20%.

5. The reflection structure of claim 4, wherein the composite layer of the oxide and the polymer comprises one oxide layer and one polymer layer stacked; or
the composite layer of the oxide and the polymer comprises at least two oxide layers and the at least two polymer layers, which are stacked one by one alternately,
wherein a material of the oxide layer is at least one of SiOx and AlOx, and a material of the polymer layer is an acrylic polymer.

6. The reflection structure of claim 1, wherein the plastic is at least one of polyethylene terephthalate, polypropylene terephthalate, polybutylene terephthalate, polyethylene naphthalate, polyvinyl chloride, polycarbonate, polyethylene, polypropylene, polystyrene, and polyamide.

7. The reflection structure of claim 1, wherein the light shielding layer (3) is disposed between the reflection layer (1) and the enhancement layer (2); or
the enhancement layer (2) is disposed between the reflection layer (1) and the light shielding layer (3).

8. The reflection structure of claim 1, wherein the substrate comprises a plurality of micropores (101).

9. The reflection structure of claim 1, wherein the reflection layer (1) comprises a PET substrate layer having a plurality of micropores (101) and the coating layer (12) located on a surface of the PET substrate layer, the enhancement layer (2) is a PET layer, and the light shielding layer (3) is a metal-plated film, wherein the metal-plated film is a metal-plated PET film.

10. A panel lamp comprising a light guide plate and a frame, wherein the panel lamp further comprises the reflection structure of any one of claims 1 to 9, and the light guide plate and the reflection structure are fixed by the frame.

11. A display comprising a backlight module which comprises a light guide plate and a frame, **characterized in that**, the backlight module further comprises the reflection structure of any one of claims 1 to 9, and the light guide plate and the reflection structure are fixed by the frame.

## Patentansprüche

1. Reflexionsstruktur, umfassend eine Reflexionsschicht (1), eine Verstärkungsschicht (2) und eine Lichtabschirmungsschicht (3), die aufeinander gestapelt sind, wobei die Reflexionsschicht (1) eine Trägerschicht (11) und eine Überzugschicht (12) an wenigstens einer Fläche der Trägerschicht (11) umfasst, die Überzugschicht (12) eine Vielzahl von Beschichtungsteilchen (121) und einen Klebstoff (122) umfasst, ein Material der Trägerschicht (11) wenigstens eins von Polyethylenterephthalat, Polyethylennaphthalat, Polycarbonat, Polymethylmethylacrylat, Polyethylen, Polypropylen und Polystyrol ist, der Klebstoff (122) ein Acrylatklebstoff ist und die Vielzahl von Beschichtungsteilchen (121) an der wenigstens einen Fläche der Trägerschicht (11) durch den Klebstoff (122) verteilt sind, um die Überzugschicht (12) zu bilden, wodurch die Überzugschicht (12) eine konkave und konvexe Fläche aufweist,
**dadurch gekennzeichnet, dass**
ein Material der Vielzahl von Beschichtungsteilchen (121) wenigstens eins von Polyethylenterephthalat, Poly-n-butylmethacrylat, Polybutylenglycolterephthalat und Polyethylennaphthalat ist;
wobei die Lichtabschirmungsschicht (3) wenigstens eins von einer Heißgoldfolie, einer Laserfolie, einer Tintenschicht, einer Verbundschicht eines Oxids und eines Polymers und einer Licht abschirmenden Kunststofffolie ist;
wobei ein Material der Verstärkungsschicht (2) wenigstens eins von einem flexiblen Glas und/oder Polypropylenterephthalat ist und
wobei eine Dichte der Reflexionsstruktur in einem Bereich von 0,5 g/cm³ bis 2,7 g/cm³ liegt.

2. Reflexionsstruktur nach Anspruch 1, wobei eine mittlere Teilchengröße der Vielzahl von Beschichtungsteilchen (121) in einem Bereich von 5 µm bis 80 µm liegt.

3. Reflexionsstruktur nach Anspruch 1, wobei eine Dicke der Verstärkungsschicht (2) in einem Bereich von 50 µm bis 1000 µm liegt, eine Dicke der Lichtabschirmungsschicht (3) in einem Bereich von 10 nm bis 250 µm liegt und eine Dicke der reflektierenden Schicht in einem Bereich von 55 µm bis 580 µm liegt, wobei the Dicke de Überzugschicht (12) in einem Bereich von 5 µm bis 80 µm liegt.

4. Reflexionsstruktur nach Anspruch 1, wobei eine Lichtdurchlässigkeit der Lichtabschirmungsschicht (3) kleiner oder gleich 20 % ist.

5. Reflexionsstruktur nach Anspruch 4, wobei die Verbundschicht aus Oxid und Polymer eine Oxidschicht und eine Polymerschicht umfasst, die gestapelt sind; oder
die die Verbundschicht aus Oxid und Polymer wenigstens zwei Oxidschichten und wenigstens zwei Polymerschichten umfasst, die abwechselnd gestapelt sind,
wobei ein Material der Oxidschicht wenigstens eins von SiOx und AlOx ist und ein Material der Polymerschicht ein Acrylpolymer ist.

6. Reflexionsstruktur nach Anspruch 1, wobei der Kunststoff wenigstens eins von Polyethylenterephthalat, Polypropylenterephthalat, Polybutylenterephthalat, Polyethylennaphthalat, Polyvinylchlorid, Polycarbonat, Polyethylen, Polypropylen, Polystyrol und Polyamid ist.

7. Reflexionsstruktur nach Anspruch 1, wobei die Lichtabschirmungsschicht (3) zwischen der Reflexionsschicht (1) und der Verstärkungsschicht (2) angeordnet ist; oder
die Verstärkungsschicht (2) zwischen der Reflexionsschicht (1) und der Lichtabschirmungsschicht (3) angeordnet ist.

8. Reflexionsstruktur nach Anspruch 1, wobei der Träger eine Vielzahl von Mikroporen (101) umfasst.

9. Reflexionsstruktur nach Anspruch 1, wobei die Reflexionsschicht (1) eine PET-Trägerschicht mit einer Vielzahl von Mikroporen (101) umfasst und die Überzugschicht (12) auf einer Fläche der PET-Trägerschicht angeordnet ist, die Verstärkungsschicht (2) eine PET-Schicht ist und die Lichtabschirmungsschicht (3) eine metallisierte Folie ist, wobei die metallisierte Folie eine metallisierte PET-Folie ist.

10. Paneellampe, umfassend eine Lichtleiterplatte und einen Rahmen, wobei die Paneellampe ferner die Reflexionsstruktur nach einem der Ansprüche 1 bis 9 umfasst und die Lichtleiterplatte und die Reflexionsstruktur durch den Rahmen fixiert sind.

11. Anzeige, umfassend ein Hintergrundbeleuchtungsmodul, das eine Lichtleiterplatte und einen Rahmen umfasst, **dadurch gekennzeichnet, dass** das Hintergrundbeleuchtungsmodul ferner die Reflexionsstruktur nach einem der Ansprüche 1 bis 9 umfasst und die Lichtleiterplatte und die Reflexionsstruktur durch den Rahmen fixiert sind.

## Revendications

1. Une structure réfléchissante, comprenant une couche réfléchissante (1), une couche de renforcement (2) et une couche pare-lumière (3) empilées ensemble, dans laquelle la couche réfléchissante (1) comprend une couche de substrat (11) et une couche de revêtement (12) sur au moins une surface de la couche de substrat (11), la couche de revêtement (12) comprend une pluralité de particules de revêtement (121) et un adhésif (122), le matériau de la couche de substrat (11) est au moins élément parmi le téréphtalate de polyéthylène, le naphtalate de polyéthylène, le polycarbonate, le polyméthylacrylate de méthyle, le polyéthylène, le polypropylène, et le polystyrène, l'adhésif (122) est un adhésif d'acrylate, et la pluralité de particules de revêtement (121) est disposée sur au moins une surface de la couche de substrat (11) par l'adhésif (122) afin de former la couche de revêtement (12), résultant en une couche de revêtement (12) dotée d'une surface concave et convexe,
**caractérisée en ce que**,
le matériau de la pluralité de particules de revêtement (121) est au moins un élément parmi le téréphtalate de polyéthylène, le méthacrylate poly-n-butyle, le téréphtalate de poly butylène glycol et le naphtalate de polyéthylène ;
dans laquelle la couche pare-lumière (3) est au moins un élément parmi une feuille d'or à chaud, un film laser, une couche d'encre, une couche composite d'un oxyde et d'un polymère, et un film plastique pare-lumière ;
dans laquelle le matériau de la couche de renforcement (2) est au moins un élément parmi un verre flexible et/ou du téréphtalate de polypropylène, et
dans laquelle la densité de la structure réfléchissante est dans la plage de 0,5 g/cm³ à 2,7 g/cm³.

2. Une structure réfléchissante selon la revendication 1, dans laquelle la taille moyenne de particule de la pluralité de particules de revêtement (121) est dans la plage de 5 µm à 80 µm.

3. Une structure réfléchissante selon la revendication 1, dans laquelle l'épaisseur de la couche de renforcement (2) est dans la plage de 50 µm à 1000 µm, l'épaisseur de la couche pare-lumière (3) est dans la plage de 10 nm à 250 µm, et l'épaisseur de la couche réfléchissante est dans la plage de 55 µm à 580 µm, dans laquelle l'épaisseur de la couche de revêtement (12) est dans la plage de 5 µm à 80 µm.

4. Une structure réfléchissante selon la revendication 1, dans laquelle la transmittance de lumière de la couche pare-lumière (3) est inférieure ou égale à 20%.

5. Une structure réfléchissante selon la revendication 4, dans laquelle la couche composite de l'oxyde et du polymère comprend une couche d'oxyde et une couche de polymère empilées ; ou
la couche composite de l'oxyde et du polymère comprend au moins deux couches d'oxyde et les au moins deux couches de polymères, qui sont empilées une par une alternativement,
dans laquelle le matériau de la couche d'oxyde est au moins l'un parmi le SiOx et le AlOx, et le matériau de la couche de polymère est un polymère acrylique.

6. Une structure réfléchissante selon la revendication 1, dans laquelle le plastique est au moins un élément parmi le téréphtalate de polyéthylène, le naphtalate de polypropylène, le téréphtalate de polybutylène, le naphtalate de polyéthylène, le chlorure de polyvinyle, le polycarbonate, le polyéthylène, le polypropylène, le polystyrène, et le polyamide.

7. Une structure réfléchissante selon la revendication 1, dans laquelle la couche pare-lumière (3) est disposée entre la couche réfléchissante (1) et la couche de renforcement (2) ; ou
la couche de renforcement (2) est disposée entre la couche réfléchissante (1) et la couche pare-lumière (3).

8. Une structure réfléchissante selon la revendication 1, dans laquelle le substrat comprend une pluralité de micropores (101).

9. Une structure réfléchissante selon la revendication 1, dans laquelle la couche réfléchissante (1) comprend une couche de substrat PET dotée d'une pluralité de micropores (101) et la couche de revêtement (12) située sur une surface de la couche de substrat PET, la couche de renforcement (2) est une couche de PET, et la couche pare-lumière (3) est un film métallisé, dans laquelle le film métallisé est un film PET métallisé.

10. Une lampe de panneau comprenant une plaque de guidage de lumière et un cadre, dans laquelle la lampe de panneau comprend en outre la structure réfléchissante selon l'une quelconque des revendications 1 à 9, et la plaque de guidage de lumière et la structure réfléchissante sont fixées par le cadre.

11. Un affichage comprenant un module de rétroéclairage qui comprend une plaque de guidage de lumière et un cadre, **caractérisé en ce que** le module de rétroéclairage comprend en outre la structure réfléchissante selon l'une quelconque des revendications 1 à 9, et la plaque de guidage de lumière et la structure réfléchissante sont fixées par le cadre.
